# EUROPÄISCHE PATENTSCHRIFT

(11) **EP 1 565 410 B1**
(45) Veröffentlichungstag und Bekanntmachung des Hinweises auf die Patenterteilung: **16.01.2008**
(21) Anmeldenummer: 03810975.7
(22) Anmeldetag: 10.11.2003
(51) Int. Cl.: C03B 11/02, C03B 11/06, C03B 11/08, C03B 7/16, C03B 27/06

(54) **ANLAGE ZUR HERSTELLUNG VON GLASSTOPFEN ZUM VERSCHLUSS VON FLASCHEN**
INSTALLATION FOR THE PRODUCTION OF GLASS STOPPERS USED FOR SEALING BOTTLES
INSTALLATION DE PRODUCTION DE BOUCHONS EN VERRE DESTINES A LA FERMETURE DE BOUTEILLES

(30) Priorität: 12.11.2002 DE 10252578; 07.05.2003 DE 10320345; 14.07.2003 DE 10331821
(43) Veröffentlichungstag der Anmeldung: 24.08.2005
(73) Patentinhaber: Boropal Technology Trading Gmbh, 94481 Grafenau- Reismühle (DE)
(72) Erfinder: LINDNER, Walter, 94481 Grafenau- Reismühle (DE)
(74) Vertreter: Manitz, Finsterwald & Partner GbR
(86) Internationale Anmeldenummer: PCT/EP2003/012513
(87) Internationale Veröffentlichungsnummer: WO 2004/043869

(56) Entgegenhaltungen:
- EP-A- 0 180 286
- EP-A- 0 564 090
- EP-A- 0 861 811
- DE-A- 19 649 030
- DE-A- 19 823 515
- FR-A- 2 187 712
- GB-A- 302 193
- GB-A- 563 800
- JP-A- 600 619
- US-A- 1 507 055

## Beschreibung

Die Erfindung betrifft eine Anlage zur Herstellung von mit einem Kopfteil versehenen Glasstopfen zum Verschluss von Flaschen, insbesondere von Wein- und Schaumweinflaschen, mit einer mehrteiligen, im geschlossenen Zustand die Negativkontur des herzustellenden Stopfens festlegenden Form mit einem Basisteil und einem Oberteil, einem Feedersystem zur Beschickung der Form mit geschmolzenem Glas, einer Mehrstationenpresse sowie einer Anordnung zur Entnahme und zum weiteren Handling der gefertigten Glasstopfen.

Glasstopfen zum Verschließen von Flaschen sind bekannt. Diese bekannten Glasstopfen werden üblicherweise mittels des so genannten Injektionsverfahrens hergestellt, d.h. es wird in eine geschlossene Form von der Unter- oder Oberseite her flüssiges Glasmaterial eingespritzt, das den Formhohlraum füllt. Nach entsprechender Abkühlung muss zuführseitig der verfestigte Glasstrang abgeschnitten werden. Nachteilig ist dabei nicht nur, dass die Schnittstelle zur Wiederherstellung des Glascharakters auch noch geschliffen und poliert werden muss, sondern es entsteht vor allem im Reservoir erhebliches Restglas, das beseitigt bzw. ggf. einer Wiederverwertung zugeführt werden muss. Generell ist dieses Injektionsverfahren zur Herstellung von Glasstopfen als technisch aufwendig und demgemäß auch teuer zu bezeichnen.

Aus der eine gattungsgemäße Anlage zeigenden DE 198 23 515 A1 ist es bekannt, mittels einer aus Basisteil und Oberteil bestehenden Presse einen Glasstopfen für einen Bügelverschluss zu fertigen, wobei sich durch den Kopfteil des Glasstopfens eine Durchbrechung zur Aufnahme eines Metallbügels erstreckt. Die Negativkontur des herzustellenden Stopfens ist im Basisteil ausgebildet, wobei der obere offene Bereich des Basisteils durch einen axial verschiebbaren Pressstempel verschlossen wird. Durch den mittels des Pressstempels erfolgenden Glasverdrängungsvorgang werden in Abhängigkeit von unvermeidlichen Volumenschwankungen der der Form zugeführten Glasposten Glasstopfen erhalten, bei denen die Dickenschwankungen der obenliegenden Fläche des geformten Vollkörpers 1,5 mm nicht überschreiten.

Aus der US-A-1507055 ist eine Pressform aus einem Basisteil und einem Oberteil bekannt, wobei die Pressform zur Herstellung unterschiedlich geformter Glaskörper dient und die Negativform jeweils im Basisteil ausgebildet ist. Der oben offene Bereich des Basisteils wird durch einen axial verschiebbaren Pressstempel verschlossen, jedoch in der Weise, dass überschüssiges Glasmaterial in einen Ringbereich zwischen Pressstempel und Basisteil verdrängt werden kann. Dieses überschüssige Glasmaterial muss nach Beendigung des Formvorgangs abgeschnitten und entfernt werden.

Aus der DE-A196 49 030 ist eine Anlage zur Herstellung von Verschlussknöpfen für Flaschen-Bügelverschlüsse bekannt. Um Wärmeprobleme und Schwundprobleme bei derartigen Glas-Verschlussknöpfen zu vermeiden, wird empfohlen, den Verschlussknopf vorzupressen und in einer weiteren Station der Maschine nachzupressen, wobei betont wird, dass Toleranzen beim Dosieren der Glasposten durch den Kopfteil selbst ausgeglichen werden können und es dabei keine Rolle spielt, ob der Kopfteil nach oben verlängert wird oder nicht. Besondere Angaben über die Formgestaltung beinhaltet diese Druckschrift nicht.

Aufgabe der vorliegenden Erfindung ist es, eine Anlage zur Herstellung von Glasstopfen zum Verschluss von Flaschen zu schaffen, die zum einen eine Glasstopfenfertigung entsprechend exakt vorgegebener Konturen gewährleistet und zum anderen eine drastische Verringerung der Fertigungskosten ermöglicht und somit den Einsatz derartiger, insbesondere nachträglich mit einer elastischen Dichtung komplettierten Glasstopfen in großem Umfange und auch als Ersatz herkömmlicher Verschlusskorken zulässt.

Eine Anlage gemäß der Erfindung umfasst eine mehrteilige, im geschlossenen Zustand die Negativkontur des herzustellenden Stopfens festlegende Form mit einem Basisteil und einem Oberteil, einem Feedersystem zur Beschickung der Form mit geschmolzenem Glas, einen Mehrstationenpressautomaten sowie eine Anordnung zur Entnahme und zum weiteren Handling der gefertigten Glasstopfen, die sich dadurch auszeichnet, dass das Basisteil eine einer ersten Stopfenteillänge entsprechenden Ausnehmung aufweist, ein Mittelteil aus zwei relativ zueinander und senkrecht, zur Formlängsachse verschiebbaren sowie selbstzentrierend kuppelbaren Teilformelementen vorgesehen ist, die im gekuppelten und am Basisteil anliegenden Zustand einen einer zweiten Stopfenteillänge sowie zumindest einem Hauptbereich des Kopfteils entsprechenden Hohlraum festlegen, und dass das den Kopfteilhohlraum verschließenden Oberteil mit einem zentralen, relativ zum Oberteil axial verschiebbaren Pressstempel die Planfläche des Kopfteils begrenzt und der Pressstempel zur Ausbildung einer Toleranzen kompensierenden Vertiefung im Kopfteil des Stopfens dient.

Mittels einer derartigen Anlage gelingt es in überraschender Weise, trotz unvermeidbarer Schwankungen des Gewichts der zur Speisung der Form benötigten Glasposten und trotz unvermeidbarer, durch notwendige Formreinigungen bedingter Formvolumenänderungen die vorgegebenen Genauigkeitsanforderungen dauerhaft zu erfüllen, und zwar durch die spezielle Ausgestaltung der Form einerseits und die Schaffung einer Toleranzen kompensierenden Vertiefung im Kopfteil des Stopfens andererseits.

Eine besonders vorteilhafte Ausgestaltung der Erfindung zeichnet sich dadurch aus, dass der dem Mittelteil zugeordnete Formhohlraum sich axial nach oben über die Planfläche des Kopfteils hinaus erstreckt und das den Kopfteilhohlraum verschließende Oberteil mit zugehörigem Pressstempel mit einem Ringansatz formschlüssig in den durch die Teilformelemente festgelegten Hohlraum eingreift, wobei der Außendurchmesser des Ringansatzes kleiner als der Außendurchmesser des Kopfteils ist.

Auf diese Weise wird das Kopfteil des Stopfens, soweit seine radial äußeren Konturen betroffen sind, in dem von den Teilformelementen gebildeten Hohlraum ausgeformt. Die Planfläche des Kopfteils wird von dem Ringansatz sowie dem Stößel des Formoberteils begrenzt. Bei geschlossener Form wird die Lage der Trennlinie zwischen dem Oberteil der Form und den den Mittelteil der Form bildenden Teilformelementen so gewählt, dass sie im Bereich der Stopfenrundung unterhalb der Planfläche gelegen ist. Auf diese Weise wird mit Sicherheit jegliche störende, insbesondere funktionsstörende Gratbildung ausgeschaltet und überdies eine perfekte Oberfläche der oberen Planfläche und der äußeren Zylinderfläche des Kopfteils gewährleistet.

Die die einzelnen Bereiche der Form festlegenden Teilformelemente sind so ausgebildet, dass sie sich beim Zusammenfahren selbst zentrieren, wozu die sich im geschlossenen Zustand berührenden Formflächen mit komplementär ausgebildeten Formschlussorganen versehen sind, die jeglichen Lateralversatz ausschließen. Das Vermeiden von Lateralversatz ist für die Einhaltung der Genauigkeitskriterien von wesentlicher Bedeutung. In diesem Zusammenhang wirkt sich auch besonders vorteilhaft das Vorsehen einer Kreuzzentrierung zwischen dem Mittelteil und dem Oberteil aus.

Eine weitere Besonderheit der Erfindung besteht darin, dass die zur Speisung der Form mit Glasposten bestimmte Station gleichzeitig als Station zur Durchführung des Pressvorgangs ausgebildet ist. Auf diese Weise wird eine wesentliche Qualitätsverbesserung des Glasstopfens erzielt, da unmittelbar nach dem Einbringen eines Glaspostens in die Form, d.h. ohne jeglichen störenden Zeitverlust, sofort der Pressvorgang durchgeführt wird und damit ein schnelles allseitiges Anlegen des noch relativ flüssigen Glases an die Form begünstigt wird, was wiederum zu einer hohen Oberflächenqualität des fertigen Produkts führt.

Das verwendete Feedersystem ist so ausgebildet, dass die einzelnen Glasposten berührungsfrei durch den Mittelteil der Form fallend auf den Formboden auftreffen können, wozu das Verhältnis von Durchmesser zur Länge der einzelnen Glasposten im Bereich von ca. 1 : 3,5 gewählt und damit erreicht wird, dass die Glaspostenlänge jeweils größer ist als die Tiefe des gesamten Formenhohlraums.

Eine für die hohe Qualität des hergestellten Glasstopfens ebenfalls bedeutsame Maßnahme besteht darin, dass in der Speisestation eine Fall- und Führungsrinne zur formzentrierten Zuführung von Glasposten mit vorgebbarer Fallhöhe vorgesehen ist. Durch diese wählbare Fallhöhe, die beispielsweise im Bereich von etwa 1m liegen kann, kann dem jeweiligen Glasposten speziell so viel an kinetischer Energie mitgegeben werden, dass die daraus resultierende Aufprallenergie in dem Formhohlraum gerade ausreicht, um das flüssige Glas des Glaspostens praktisch schlagartig über die gesamte Formhöhe an der Formwand zur Anlage zu bringen, und zwar bis in den oberen Bereich, wo dann der Ringansatz und der Stempel des Formoberteils wirksam werden. Diese schlagartige und vollflächige Beaufschlagung der gesamten Formwand gewährleistet eine hohe Glas- bzw. Artikelqualität.

Für die Zuführung von Glasposten zur Form wird zweckmäßigerweise eine Fall- und Führungsrinne mit geringer, im Bereich von etwa 2° bis 8° liegender Neigung zur Vertikalen verwendet, welche formseitig einen großen Umlenkradius besitzt, so dass trotz der geringen Neigung der Fall- und Führungsrinne eine vertikale Glaspostenzuführung zur Form erzielt wird.

Die aus den einzelnen Komponenten bestehende Form wird vorzugsweise in einem Formenhalter frei schwebend, insbesondere über eine Art Kragarm aufgehängt, so dass unterhalb der Form ein Freiraum entsteht, in den eventuell entstehende Scherben oder auch nicht korrekt abtransportierte Stopfen fallen können, so dass keinerlei Gefahr einer Störung der Schließbewegung der Form entstehen kann.

Um sicherzustellen, dass beim Abkühlvorgang zu einer Minderqualität führende Lösetendenzen des Glases von bestimmten Bereichen der Formwand ausgeschaltet werden, erfolgt gemäß der Erfindung in einer oder mehreren der Speise- und Pressstation nachgeordneten Stationen eine mechanische oder pneumatische Nachpressung, die zu einer Stabilisierung der Außenhaut führt. Dazu wird die Vertiefung und/oder die Planfläche mit Druckluft oder auch mittels eines Stempels kurzzeitig, z.B. während etwa einer halben Sekunde, mit Druck beaufschlagt.

Bevorzugt wird eine unmittelbar nach dem Pressvorgang wirksam werdende Einrichtung zum kurzzeitigen Aufheizen des Bereichs der Vertiefung des Kopfteils verwendet, um zu erreichen, dass Schrumpfvorgänge auf diesen keine Funktionsfläche darstellenden Bereich beschränkt werden. Wenn das in diesem unkritischen Bereich durch Schrumpfung bewirkte Einfallen der Fläche verhindert oder minimiert werden soll, wird vorzugsweise ein Pressstempel mit konkav ausgebildeter Stirnfläche verwendet, so dass der dadurch zunächst entstehende konvexe Flächenbereich nach erfolgter Schrumpfung in einen im wesentlichen ebenen Bereich überführt und damit ein höherwertiges Produkt geschaffen wird.

Die vorstehend geschilderten Maßnahmen tragen durchwegs auch dazu bei, dass die Toleranzen im Bereich der aufzunehmenden Dichtung sehr definiert vorgegeben und exakt eingehalten werden können, was für die einwandfreie Funktion des fertigen Glasstopfens im Zusammenwirken mit einer zu verschließenden Flasche von wesentlicher Bedeutung ist.

Ausführungsbeispiele von erfindungsgemäßen Anlagen werden nachfolgend anhand der Zeichnung beschrieben; in der Zeichnung zeigt:
- Fig. 1: eine schematische Axialschnittdarstellung der innerhalb der Anlage verwendeten Form zur Glasstopfenherstellung,
- Fig. 2: eine schematische Axialschnittdarstellung einer Ausführungsvariante, bei der die Pressform in einem Formenhalter frei schwebend aufgehängt ist,
- Fig. 3: eine im wesentlichen der Fig. 2 entsprechende Darstellung, wobei jedoch zwei Formen gleichzeitig im Formenhalter aufgenommen sind, und
- Fig. 4: eine weitere schematische Axialschnittdarstellung etwa analog der Fig. 1, wobei jedoch eine besonders vorteilhafte Ausgestaltung und ein entsprechendes Zusammenwirken zwischen den Teilformelementen und dem Oberteil der Form realisiert ist.

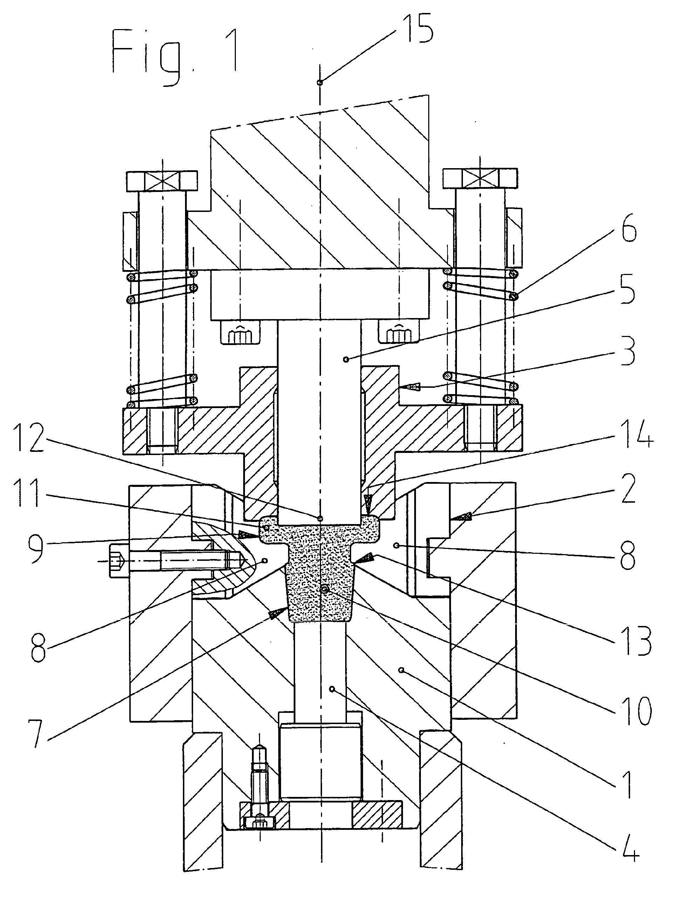

Nach Fig. 1 umfasst eine zur Herstellung eines erfindungsgemäßen Pressglasstopfens 10 geeignete Form ein Basisteil 1, ein Mittelteil 2 und ein Oberteil 3, zu dem ein axial verfahrbarer Pressstempel 5 gehört.

Der vorzugsweise zylindrisch ausgebildete Pressstempel 5 ist separat oder in dem Oberteil 3 der Form exakt geführt und bezüglich dieses Oberteils über eine Mehrzahl von vorzugsweise ringförmig angeordneten Druckfedern 6, eine zentral angeordnete Druckfeder oder Pneumatikzylinder abgestützt, so dass beim Formschließvorgang zunächst das Oberteil 3 am Mittelteil 2 zur Anlage und dann der Pressstempel 5 nacheilend zur Wirkung kommt.
Im Basisteil 1 ist eine Ausnehmung 7 vorgesehen, welche bodenseitig durch einen Stößel 4 geschlossen ist, dessen Durchmesser geringer ist als die Bodenfläche der Ausnehmung 7. Dieser Stößel 4 besitzt eine plane, konkav oder konvex geformte oder eine sonstige eine gewünschte Formgebung im Artikel ausbildende Stirnfläche und ist axial beweglich gelagert.

Der Stößel 4 übernimmt bei geöffneter Form Ausschubfunktion bezüglich eines fertigen Glasstopfens. Besonders vorteilhaft ist es, die Axialbeweglichkeit des Stößels 4 so zu gestalten, dass er unter Vergrößerung des Formhohlraums beim Einspeisevorgang zurückgezogen werden kann. Auf diese Weise wird eine Verbesserung der Einspeisung erzielt, da der längliche Tropfen bei zurückgezogenem Stößel besonders günstig in der Weise in der Form aufgenommen werden kann, dass der obere Formbereich zunächst frei bleibt, d.h. nicht mit dem geschmolzenen Glas in Berührung kommt, und außerdem die Gefahr eines unerwünschten Kippens des länglichen Glastropfens beseitigt wird. Beim Schließen der Form können Stößel 4 und Pressstempel 5 gegensinnig bewegt werden.

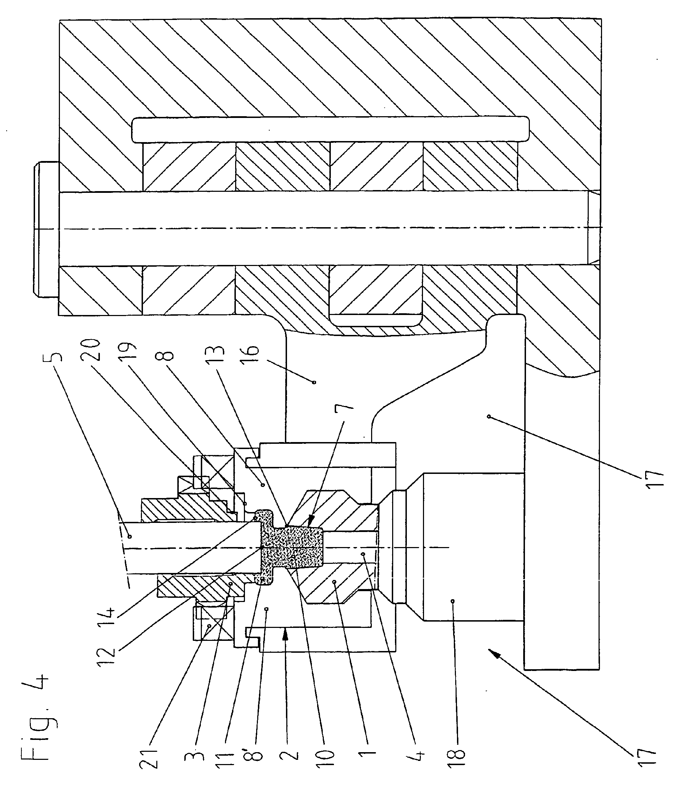

Durch die Ausnehmung 7 wird die leicht konische Form des unteren Teils des Stopfens 10 vorgegeben. Am Übergang von dem Basisteil zum Mittelteil der Form ist eine Unstetigkeit 13 in der Stopfenaußenkontur vorgesehen, da an dieser Stelle ein Übergang vom konischen Bereich zu einem zylindrischen Bereich erfolgt. An diesen zylindrischen Bereich des Stopfens 10 schließt sich ein scheibenförmiges Kopfteil 11 an, dessen Außenkontur in diesem Falle durch das Mittelteil 2 und das Oberteil 3 der Form vorgegeben wird. Eine demgegenüber bevorzugte Ausführungsform wird noch anhand der Fig. 4 erläutert.

Die beiden Formteilhälften 8, 8' des Mittelteils 2 sind zur Vermeidung von jeglichem Lateralversatz beim Zusammenfahren selbstzentrierend ausgebildet und legen einen Hohlraum 9 fest, der durch das Oberteil 3 verschlossen wird. Dieser so definierte Hohlraum 9 ist sehr exakt vorgebbar, und die erfindungsgemäße Form gewährleistet nicht nur eine exakte Vorgabe der Dickenabmessung des ringförmigen Kopfteils, sondern auch eine Planfläche hoher Qualität an der Stopfenstirnseite.

Von besonderer Bedeutung ist die mittels des Pressstempels 5 erfolgende Ausbildung einer Vertiefung 12 im Kopfteil 11, denn durch diese Vertiefung können Toleranzen der Glasposten und/oder Veränderungen des Formhohlraums, herrührend von erforderlichen Reinigungsvorgängen, so ausgeglichen werden, dass die Anforderungen an die Exaktheit der Außenkonturen des Stopfens 10 immer sichergestellt werden können.

Beim Betrieb der erfindungsgemäßen Form kann das Einbringen der mittels der Feedervorrichtung bereitgestellten Glasposten in der Weise erfolgen, dass der gebildete Glasposten frei nach unten bis zum Boden des Basisteils 1 durchfallen kann und ein Anlegen der Glasmasse an die Formwände im Verlauf des Zusammensackens des länglichen Glaspostens erfolgt, wobei die Form mittels ihres Oberteils 3 geschlossen wird, wenn die Glasmasse den Hohlraum 9 im Wesentlichen ausgefüllt hat.

Fig. 4 zeigt eine der bisher beschriebenen Anlage im wesentlichen entsprechende, jedoch verbesserte Ausführungsform, wobei die Außenkontur des Kopfteils 11 weitgehend durch das Form-Mittelteil 2 vorgegeben wird. Dazu ist der durch die Teilformelemente 8, 8' festgelegte Hohlraum 9 in Axialrichtung nach oben über die Planfläche 14 des Kopfteils 11 hinausgeführt, und das den Kopfteilhohlraum verschließenden Oberteil 3 mit zugehörigem Pressstempel 5 ist mit einem Ringansatz 20 ausgestattet, der formschlüssig in den durch die Teilformelemente 8, 8' festgelegten Hohlraum 9 eingreift. Im geschlossenen Zustand der Form, der auf der linken Halbseite der Darstellung gezeigt ist, sitzt dabei das Oberteil 3 auf einer Ringschulter 19 der Teilformelemente 8, 8' auf. Der Außendurchmesser des Ringansatzes 20 ist kleiner als der Außendurchmesser des Kopfteils 11. Der radial äußere Bereich des Ringansatzes 20 ist konkav gekrümmt, was zur Folge hat, dass die Trennlinie zwischen dem Formoberteil 3 und dem Mittelteil 2 unterhalb der Planfläche 14 gelegen ist, so dass jegliche Gratbildung im Bereich der eine Funktionsfläche darstellenden Planfläche 14 grundsätzlich ausgeschlossen ist. Damit wird die Qualität des gefertigten Stopfens weiter erhöht und eine mögliche Quelle für Ausschuss beseitigt.

Zu der Erzielung einer stets gleich bleibend hohen Qualität trägt die vorgesehene Kreuzzentrierung 21 bei, die auch bei unterschiedlichen Temperaturen stets eine gute Funktion besitzt. Die durch ein gekreuztes Viereck gekennzeichneten Nuten sind konzentrisch zum Ringansatz 20 angeordnet und an den Teilformelementen 8, 8' angebracht, während die zugehörigen, in die Nuten eingreifenden Nasen in entsprechender Weise am Formoberteil 3 vorgesehen sind. Die Anordnung der Nuten und zugehörigen Nasen kann bezüglich ihrer Position auch in umgekehrter Weise erfolgen.

Für alle beschriebenen Ausführungsformen von Anlagen nach der Erfindung ist wesentlich, dass das Einbringen des geschmolzenen Glaspostens in die Form und das mit der endgültigen Formung des Glasstopfens verbundene Schließen der Form in Verbindung mit dem Pressvorgang in einer Station erfolgt, da dies eine Minimierung der Zeitspanne zwischen Glaspostenzuführung und Ausformung des Glasstopfens und damit eine hohe Qualität gewährleistet.

Zur Erzielung der angestrebten hohen Qualität des gefertigten Glasstopfens ist bevorzugt in der Speisestation eine Fall- und Führungsrinne vorgesehen, die es ermöglicht, den Glasposten in einer definierten Höhe oberhalb der Form loszulassen und durch Schwerkraft so zu beschleunigen, dass durch die Umformung der kinetischen Energie beim Auftreffen des Glaspostens auf die Formwand ein praktisch unmittelbares Anliegen des flüssiges Glases an der gesamten Formwand bis in den Bereich, in dem der Stempel wirksam wird, erfolgt. Während ohne diese Maßnahme durch schnelles Aushärten einer dünnen Glasschicht an bestimmten Bereichen der Formoberfläche sich eine Verschlechterung der Artikelqualität ergeben könnte, wird dieser unerwünschte Effekt durch die vorstehend beschriebene Glaspostenzuführung über eine nahezu senkrechte Fall- und Führungsrinne, die bezüglich des Glaspostens auch zusätzlich formgebend wirken kann, mit Sicherheit ausgeschaltet.

Durch das Speisen der Form und das in der gleichen Station erfolgende Durchführen des Pressvorgangs ist es erforderlich, das Oberteil 3 der Presse mit dem Pressstempel 5 wegschwenkbar bzw. verfahrbar auszugestalten, was beispielsweise über eine geeignete, nach Art einer S-Kurve gestaltete Kulissenführung erfolgen kann. In diesem Zusammenhang ist von Bedeutung, dass diese verfahrbare Presseinheit bereits während des Fallens des Glasstopfens gestartet, im Verlauf der Kurvenbahn beschleunigt und vor dem Schließen der Form wieder abgebremst werden kann, so dass störende Schlagbeaufschlagungen der Form vermieden und optimal kurze Taktzeiten gewährleistet werden können.

Um auszuschließen, dass sich das Glas beim Abkühlvorgang durch Schrumpfung an einer unerwünschten Stelle von der Form löst und dadurch Minderqualität entsteht, wird bevorzugt in einer oder mehreren der Speise- und Pressstation nachgeordneten Stationen ein mechanisches oder pneumatisches Nachpressen zur Stabilisierung der Außenhaut vorgenommen. Die entsprechende Druckbeaufschlagung erfolgt dabei im Bereich des Kopfteils 11, d.h. im Bereich der Vertiefung 12 und ggf. an der diesen Bereich umgebenden Planfläche 14.

Um die Schrumpfungsvorgänge auf einen hinsichtlich der Funktion des Schrumpfens unkritischen Bereich zu beschränken, wird vorzugsweise unmittelbar nach dem Pressvorgang die Vertiefung 12 im Kopfteil 11 nochmals gezielt und kurzzeitig, z.B. mittels eines Brenners, aufgeheizt, wobei diese Aufheizung auf diesen vertieften Bereich beschränkt wird. Auf diese Weise wird erreicht, dass schrumpfungsbedingte Einfalleffekte ausschließlich auf diesen unkritischen Bereich der Vertiefung beschränkt werden und sich nicht auf Funktionsflächen, insbesondere nicht auf die eine Funktionsfläche darstellende Planfläche 14 auswirken.
Wenn ein schrumpfungsbedingtes Einsinken der Fläche der Vertiefung 12 ausgeschaltet oder minimiert werden soll, kann ein Pressstempel 5 mit konkaver Stirnfläche Verwendung finden, da auf diese Weise die Fläche der Vertiefung 12 zunächst konvex ausgeformt und dann durch Schrumpfung in eine praktisch ebene Fläche überführt wird.

Alle diese Maßnahmen tragen dazu bei, dass bei der Massenfertigung derartiger Glasstopfen sowohl die technischen Anforderungen hinsichtlich hoher Genauigkeit als auch die ästhetischen Anforderungen hinsichtlich des Erscheinungsbilds des Glasstopfens erfüllt und vor allem auch die Toleranzen im Bereich der aufzunehmenden Dichtung sehr genau eingehalten werden können.

Die erforderliche Kühlung der Form erfolgt primär durch Abstrahlung der Wärme, wobei nach relativ kurzer Zeit die Form bereits geöffnet und der erhaltene Stopfen, der im Außenbereich noch eine Temperatur von etwa 500°C besitzt, entnommen werden kann. Dieses Entnehmen nach erfolgter Formöffnung erfolgt durch eine Ausschubbewegung mittels des Stößels 4 sowie einen am Kopfteil angreifenden Sauggreifer. Auf diese Weise wird jegliches Steckenbleiben des Stopfens in der Form ausgeschlossen.

Der so entnommene Stopfen kann dann mittels Klauen seitlich erfasst und über eine Stangenführung unter gleichzeitiger Ausführung eines die Planfläche 14 nach unten bringenden Drehvorgangs zu einem Transportband geleitet werden, das zu einer Kühlbahn führt. Nach entsprechender Abkühlung werden die Stopfen unter Einschaltung eines sogenannten Singleliners vorzugsweise in einer Reihe auf einer weiteren Transportbahn angeordnet, wo die Stopfen vollautomatisch kontrolliert und mit einer elastischen Dichtung versehen werden können.

Anschließend erfolgt die Verpackung, und zwar bevorzugt in Palettenform, wobei sich pro Quadratmeter in einer Lage etwa 900 Stück unterbringen lassen, so dass beispielsweise bei Nutzung von möglichen 33 Lagen auf einer Palette ca. 30.000 Stopfen zusammengefasst werden können und dabei ein Gesamtgewicht von etwa 0,8 t erhalten wird. Dies bedeutet, dass problemlos auf einem Lkw etwa 33 Paletten bzw. ca. 1 Mio. Stopfen transportiert werden können und demgemäß die Transportkosten pro Stück weitgehend vernachlässigbar sind. Damit ermöglicht es die Erfindung, die jeweilige Anlage zur Glasstopfenproduktion in dem dafür am besten geeigneten Territorium zu betreiben, da die Transportkosten zum Flaschenabfüllort, wo die Stopfen benötigt werden, kostenmäßig nicht ins Gewicht fallen.

Für den praktischen Einsatz der Anlage nach der Erfindung ist dabei generell von Bedeutung, dass die Glasstopfen komplett und einsatzfertig aus der Pressmaschine kommen und keinerlei Nacharbeit erforderlich ist, und dass der Glasbedarf gleich dem Gewicht der fertigen Teile ist, d.h. es tritt keinerlei störendes Restglas in der Fertigung auf. Für die Wirtschaftlichkeit der Anlage ist dabei ferner von Bedeutung, dass die Glasstopfen vollautomatisch von der Pressform bis in die Kühlbahn transportiert werden, am Ende der Kühlbahn automatisch entnommen, kontrolliert und komplettiert bzw. verpackt werden können.

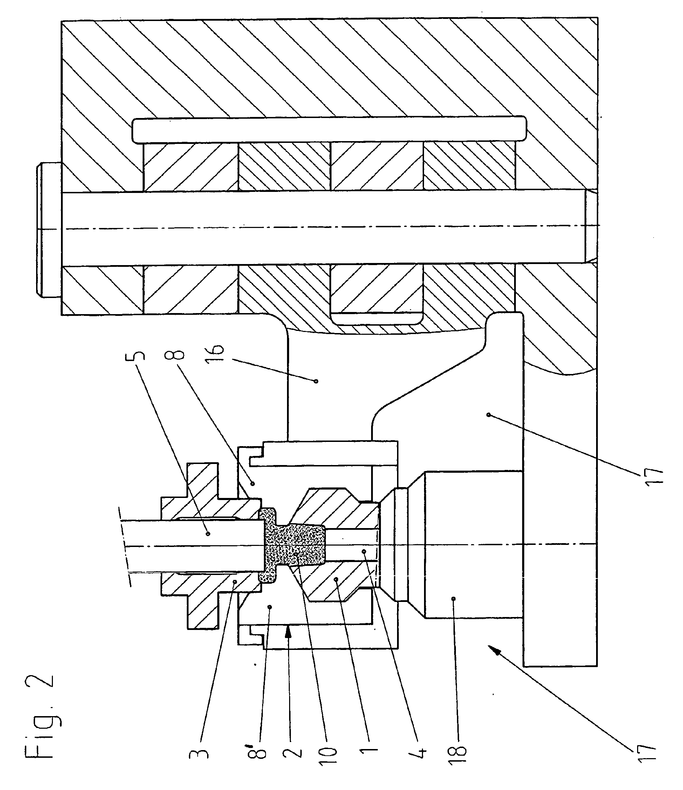

Fig. 2 zeigt in schematischer Weise eine bevorzugte Ausgestaltung mit einem Formenhalter 16, in dem das Mittelteil 2 der aus Basisteil 1, Mittelteil 2 und Oberteil 3 bestehenden Form praktisch frei schwebend aufgehängt ist. Durch einen derartigen Formenhalter wird erreicht, dass Scherben oder komplette Stopfen, die nicht sauber abtransportiert werden, nach unten in den Freiraum 17 durchfallen und von dort entfernt werden können. Damit ist sichergestellt, dass derartige Scherben oder Stopfen bzw. Stopfenteile keinesfalls die Schließbewegung der Form stören können, wie dies dann der Fall wäre, wenn die Formen auf einer Grundplatte in herkömmlicher Weise gleiten würden und die von oben ausgeübten Presskräfte von der Form direkt auf die Grundplatte übertragen und dort abgefangen werden würden. Im Falle der gemäß der Erfindung vorgesehenen Verwendung eines Formenhalters 6 wird die Form über ein der Form individuell zugeordnetes Grundteil 18 abgestützt, neben dem sich die erforderlichen Freiräume 17 ergeben.

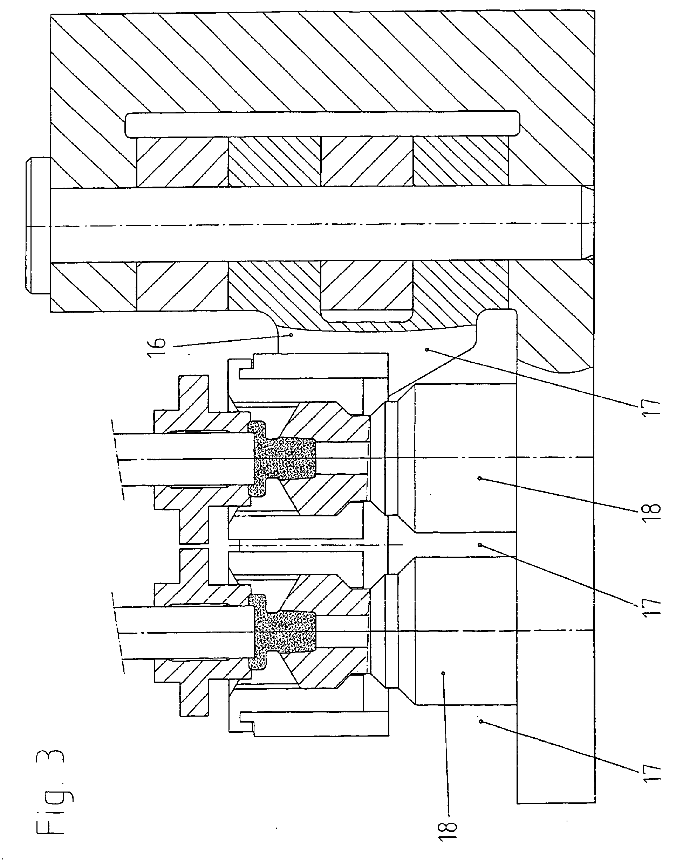

Fig. 3 entspricht im wesentlichen der Darstellung nach Fig. 2, aber es sind in diesem Falle zur Ermöglichung eines Doppeltropfenbetriebs zwei Formen gleichzeitig im Formenhalter 16 aufgenommen, so dass zwei Glasstopfen 10 gleichzeitig gepresst werden können. Auch hier ist eine individuelle Abstützung der einzelnen Formen über ein Grundteil 18 unter Ausbildung von unterhalb den Formen gelegenen Freiräumen 17 erreicht.

Um bei der Handhabung des Glasstopfens und insbesondere auch beim Verschließen von Flaschen auftretenden Stoßbelastungen Rechnung zu tragen und die Sicherheit gegen eventuelle Brucheffekte im Bereich des Bundes weiter zu erhöhen, bzw. Brucheffekte völlig auszuschalten, wird gemäß der Erfindung die Planfläche vorzugsweise mit einer dünnen Dämpfungsschicht, vorzugsweise aus einem Kunststoffmaterial versehen. In analoger Weise könnte eine solche Dämpfungsschicht auch in der Aluminiumhaube der Planfläche des Stopfens gegenüberliegend vorgesehen sein, die im Zuge des Verschließens von Flaschen den Stopfen übergreifend angebracht wird. Gegebenenfalls könnte auch ein loses Dämpfungselement zwischen Stopfen und Aluminiumhaube Verwendung finden.

Die Dicke der auf die Planfläche des Stopfens aufzubringenden Dämpfungsschicht entspricht einer dünnen Folie und kann beispielsweise durch Aufwalzen und anschließendes Aushärten angebracht werden.

### Bezugszeichenliste

- 1: Basisteil
- 2: Mittelteil
- 3: Oberteil
- 4: Stößel
- 5: Pressstempel
- 6: Druckfeder
- 7: Ausnehmung
- 8, 8': Teilformelement
- 9: Hohlraum
- 10: Stopfen
- 11: Kopfteil
- 12: Vertiefung
- 13: Unstetigkeit
- 14: Planfläche
- 15: vertikale Formachse
- 16: Formenhalter
- 17: Freiraum
- 18: Grundteil
- 19: Ringschulter
- 20: Ringansatz
- 21: Kreuzzentrierung

## Patentansprüche

1. Anlage zur Herstellung von mit einem Kopfteil versehenen Glasstopfen zum Verschluss von Flaschen, insbesondere von Wein- und Schaumweinflaschen,
mit einer mehrteiligen, im geschlossenen Zustand die Negativkontur des herzustellenden Stopfens (10) festlegenden Form mit einem Basisteil (1) und einem Oberteil (3), einem Feedersystem zur Beschickung der Form mit geschmolzenem Glas, einer Mehrstationenpresse sowie einer Anordnung zur Entnahme und zum weiteren Handling der gefertigten Glasstopfen,
**dadurch gekennzeichnet,**
**dass** das Basisteil (1) eine einer ersten Stopfenteillänge entsprechenden Ausnehmung (7) aufweist,
**dass** zwischen dem Basisteil (1) und dem Oberteil (3) ein Mittelteil (2) aus insbesondere zwei relativ zueinander und senkrecht zur Formlängsachse (15) verschiebbaren sowie selbstzentrierend kuppelbaren Teilformelementen (8, 8') vorgesehen ist, die im gekuppelten und am Basisteil (1) anliegenden Zustand einen einer zweiten Stopfenteillänge sowie zumindest einem Hauptbereich des Kopfteils (11) entsprechenden Hohlraum (9) festlegen, und
**dass** das den Kopfteilhohlraum verschließende Oberteil (3) mit einem zentralen, relativ zum Oberteil (3) axial verschiebbaren Pressstempel (5) die Planfläche (14) des Kopfteils (11) begrenzt und der Pressstempel (5) zur Ausbildung einer Toleranzen kompensierenden Vertiefung (12) im Kopfteil (11) des Stopfens (10) dient.

2. Anlage nach Anspruch 1,
**dadurch gekennzeichnet,**
**dass** der von den das Mittelteil (2) bildenden Teilformelementen (8, 8') festgelegte Hohlraum (9) sich axial über die Planfläche (14) des Kopfteils (11) hinaus erstreckt und das Kopfteil (11) einerseits an seinem Außenumfang und andererseits an einem radial außen liegenden Randbereich der Planfläche (14) begrenzt.

3. Anlage nach Anspruch 2,
**dadurch gekennzeichnet,**
**dass** das den Kopfteilhohlraum verschließende Oberteil (3) mit zentral geführtem Pressstempel (5) mit einem Ringansatz (20) formschlüssig in den durch die Teilformelemente (8, 8') festgelegten Hohlraum (9) eingreift, wobei der Außendurchmesser des Ringansatzes (20) kleiner als der Außendurchmesser des Kopfteils (11) ist.

4. Anlage nach einem der vorhergehenden Ansprüche,
**dadurch gekennzeichnet,**
**dass** die Ausnehmung (7) des Basisteils (1) bodenseitig durch einen eine Ausschubfunktion besitzenden Stößel (4) begrenzt ist, dessen Stirnfläche kleiner ist als die Bodenfläche der Ausnehmung (7), und dass das Basisteil (1) insbesondere einteilig ausgebildet ist.

5. Anlage nach einem der vorhergehenden Ansprüche,
**dadurch gekennzeichnet,**
**dass** die erste Stopfenteillänge sich ausgehend von der Bodenfläche des Basisteils (1) vorzugsweise konisch erweitert und an einer Unstetigkeitsstelle (13) des Stopfendurchmessers endet.

6. Anlage nach Anspruch 5,
**dadurch gekennzeichnet,**
**dass** die selbstzentrierend kuppelbaren Teilformelemente (8, 8') des Mittelteils (2) einerseits die zweite, sich von der Unstetigkeitssstelle (13) bis zum Kopfteil (11) erstreckende Stopfenteillänge von insbesondere zylindrischer Form und verringertem Durchmesser und andererseits das vorzugsweise scheibenförmig gestaltete Kopfteil (11) nahezu über dessen gesamte Höhe ausformen.

7. Anlage nach Anspruch 6,
**dadurch gekennzeichnet,**
**dass** bei geschlossener Form die Trennlinie zwischen dem Oberteil (3) der Form und den das Mittelteil (2) der Form bildenden Teilformelementen (8, 8') im Bereich der Stopfenrundung unterhalb der Planfläche (14) des Stopfens (10) gelegen ist.

8. Anlage nach einem der vorhergehenden Ansprüche,
**dadurch gekennzeichnet,**
**dass** das Oberteil (3) der Form am scheibenförmigen Kopfteil (11) einerseits eine ebene Planfläche (14) und andererseits einen Teilbereich der Rundung ausbildet, die in eine zylindrische Außenkontur des Kopfteils (11) übergeht.

9. Anlage nach einem der vorhergehenden Ansprüche,
**dadurch gekennzeichnet,**
**dass** der Durchmesser des Pressstempels (5) größer ist als der Durchmesser der zweiten Stopfenteillänge.

10. Anlage nach einem der vorhergehenden Ansprüche,
**dadurch gekennzeichnet,**
**dass** der Pressstempel (5) bezüglich des Formoberteils (3) nacheilend betätigt und zwischen Pressstempel (5) und Oberteil (3) eine zentrale Druckfeder, eine Mehrzahl von ringförmig angeordneten Druckfedern (6) oder wenigstens ein Pneumatikzylinder angebracht ist.

11. Anlage nach einem der vorhergehenden Ansprüche,
**dadurch gekennzeichnet,**
**dass** der eine Ausschubfunktion besitzende Stößel (4) während des Einspeisevorgangs in eine die Formtiefe vergrößernde Rückzugstellung überführbar ist.

12. Anlage nach einem der vorhergehenden Ansprüche,
**dadurch gekennzeichnet,**
**dass** bei seitlich versetzt positioniertem Formoberteil (3) die ansonsten geschlossene Form von einem für Tropfenbetrieb ausgebildeten Feedersystem mit berührungsfrei durch den Mittelteil der Form fallenden Glasposten gespeist ist, deren Verhältnis von Durchmesser zur Länge im Bereich von etwa 1 : 3,5 gelegen und deren Länge vorzugsweise größer als die Tiefe des Formhohlraums gewählt ist.

13. Anlage nach einem der vorhergehenden Ansprüche,
**dadurch gekennzeichnet,**
**dass** die zur Speisung der Form mit Glasposten bestimmte Station gleichzeitig als Station zur Durchführung des Pressvorgangs ausgebildet ist.

14. Anlage nach einem der vorhergehenden Ansprüche, **dadurch gekennzeichnet,**
**dass** in der Speisestation eine Fall- und Führungsrinne zur bezüglich der Form zentrierten Zuführung von Glasposten aus vorgebbarer Fallhöhe vorgesehen ist.

15. Anlage nach Anspruch 14,
**dadurch gekennzeichnet,**
**dass** die Fall- und Führungsrinne mit geringer, im Bereich von etwa 2° bis 8° liegenden Neigung zur Vertikalen verläuft und formseitig gegebenenfalls einen großen Umlenkradius zur Erzielung einer vertikalen Glaspostenzuführung aufweist.

16. Anlage nach einem der vorhergehenden Ansprüche,
**dadurch gekennzeichnet,**
**dass** in einer oder mehreren auf die Speise- und Pressstation folgenden Stationen je eine mechanisch oder pneumatisch auf die Vertiefung (12) des Kopfteils (11) des Stopfens (10) einwirkende Nachpresseinrichtung vorgesehen ist.

17. Anlage nach einem der vorhergehenden Ansprüche,
**dadurch gekennzeichnet,**
**dass** eine unmittelbar nach dem Pressvorgang wirksam werdende Einrichtung zum kurzzeitigen Aufheizens des Bereichs der Vertiefung (12) des Kopfteils (11) vorgesehen ist.

18. Anlage nach Anspruch 17,
**dadurch gekennzeichnet,**
**dass** die Stirnfläche des Pressstempels (5) konkav ausgebildet ist.

19. Anlage nach einem der vorhergehenden Ansprüche,
**dadurch gekennzeichnet,**
**dass** zumindest die beiden Teilformelemente (8, 8') des Mittelteils (2) an den einander zugewandten, sich im geschlossenen Zustand berührenden Flächen mit komplementär ausgebildeten Formschlussorganen ausgestattet sind und vorzugsweise zwischen dem Mittelteil (2) und dem Oberteil (3) eine Kreuzzentrierung (21) vorgesehen ist.

20. Anlage nach einem der vorhergehenden Ansprüche,
**dadurch gekennzeichnet,**
**dass** jede aus Basisteil (1), Mittelteil (2) und Oberteil (3) bestehende Form unter Ausbildung eines bodenseitigen Freiraums (17) in einem Formenhalter (16) aufgehängt ist.

21. Anlage nach Anspruch 20,
**dadurch gekennzeichnet,**
**dass** das Basisteil (1) und das Mittelteil (2) gegen auftretende vertikale Presskräfte über ein ihnen zugeordnetes Grundteil (18) abgestützt ist.

22. Anlage nach einem der vorhergehenden Ansprüche,
**dadurch gekennzeichnet,**
**dass** zur kontinuierlichen Glasstopfenfertigung mehrere Formen auf einem Drehteller angeordnet und über ein Einfachtropfen- oder Doppeltropfen-Feedersystem mit definierten Glasposten über Führungsrinnen beschickbar und in einer der jeweiligen Beschickungsstation nachgeordneten Entnahmestation die durch Konvektionskühlung verfestigten Glasstopfen (10) mittels des bodenseitig vorgesehenen Stößels (4) und eines Saughebers aus der jeweiligen Form entnehmbar und über eine am Kopfteil (11) angreifende Gleit-Fördereinrichtung auf ein Transportband überführbar sind.

23. Anlage nach Anspruch 22,
**dadurch gekennzeichnet,**
**dass** auf das Transportband eine Kühlbahn folgt, in die jeweils eine Mehrzahl von Stopfen (10) gleichzeitig durch einen Querschiebevorgang vom Transportband überführbar ist.

24. Anlage nach Anspruch 22,
**dadurch gekennzeichnet,**
**dass** der Kühlbahn ein Singleliner, eine Kontrollstrecke sowie eine Station zum Aufbringen einer Dichtung nachgeordnet sind und anschließend eine Einheit zur Überführung der fertigen Stopfen auf eine Palette vorgesehen ist.

25. Anlage nach Anspruch 1,
**gekennzeichnet durch**
eine mit den gefertigten Stopfen beschickbare Aufheizstrecke, in der die Stopfen auf eine im wesentlichen durchgehend gleichförmige Temperatur gebracht werden, und eine sich daran anschließenden Gebläseluft-Kühlstrecke, in der zumindest der Außenbereich der Glasstopfen intensiv abgekühlt und stabilisiert wird.

## Claims

1. A plant for the manufacture of glass stoppers provided with a head part for the closing of bottles, in particular of wine bottles and sparkling wine bottles,
comprising a multi-part mold determining the negative contour of the stopper (10) to be manufactured in the closed state and having a base part (1) and an upper part (3), a feeder system for supplying the mold with molten glass, a multistation press and an arrangement for the removal and for the further handling of the glass stoppers produced,
**characterized in that**
the base part (1) has a cut-out (7) corresponding to a first part length of a stopper;
**in that** a middle part (2) of two part elements (8, 8') of the mold is provided between the base part (1) and the upper part (3), said two part elements of the mold in particular being displaceable relative to one another and perpendicular to the longitudinal axis (15) of the mold, being able to be coupled in a self-centering manner and determining a hollow space (9) corresponding to a second part length of a stopper as well as to at least one main region of the head part (11) in the coupled state contacting the base part (1); and
**in that** the upper part (3) closing the hollow space of the head part and having a central pressing stamp (5) axially displaceable relative to the upper part (3) bounds the planar surface (14) of the head part (11) and the pressing stamp (5) serves for the forming of a tolerance-compensating recess (12) in the head part (11) of the stopper (10).

2. A plant in accordance with claim 1, **characterized in that** the hollow space (9) determined by the part elements (8, 8') of the mold forming the middle part (2) extends axially beyond the planar surface (14) of the head part (11) and bounds the head part (11) at its outer periphery, on the one side, and at a radially outwardly disposed marginal region of the planar surface (14), at the other side.

3. A plant in accordance with claim 2, **characterized in that** the upper part (3) with a centrally guided pressing stamp (5) closing the hollow space of the head part engages in a shape-matched manner with a ring nose (20) into the hollow space (9) determined by the part elements (8, 8') of the mold, with the outer diameter of the ring nose (20) being smaller than the outer diameter of the head part (11).

4. A plant in accordance with any one of the preceding claims, **characterized in that** the cut-out (7) of the base part (1) is bounded at the base side by a plunger (4) having an ejection function and whose front surface is smaller than the base surface of the cut-out (7); and **in that** the base part (1) is in particular made in one part.

5. A plant in accordance with any one of the preceding claims, **characterized in that** the first part length of the stopper diverges, preferably diverges conically, starting from the base surface of the base part (1) and ends at a discontinuity position (13) of the stopper diameter.

6. A plant in accordance with claim 5, **characterized in that** the part elements (8, 8') of the mold of the middle part (2), which can be coupled in a self-centering manner, form the second part length of the stopper of in particular cylindrical shape and reduced diameter extending from the discontinuity position (13) up to the head part (11), at the one end, and the head part (11), preferably designed in disk shape, over practically its total height, at the other end.

7. A plant in accordance with claim 6, **characterized in that**, when the mold is closed, the dividing line between the upper part (3) of the mold and the part-elements (8, 8') of the mold forming the middle part (2) of the mold is disposed beneath the planar surface (14) of the stopper (10) in the region of the stopper rounding.

8. A plant in accordance with any one of the preceding claims, **characterized in that** the upper part (3) of the mold forms a smooth planar surface (14) on the disk-shaped head part (11), on the one hand, and a part region of the rounding, on the other hand, which merges into a cylindrical outer contour of the head part (11).

9. A plant in accordance with any one of the preceding claims,
**characterized in that** the diameter of the pressing stamp (5) is larger than the diameter of the second part length of the stopper.

10. A plant in accordance with any one of the preceding claims, **characterized in that** the pressing stamp (5) is actuated in lagging manner with respect to the upper part (3) of the mold and a central compression spring, a plurality of compression springs (6) arranged in a ring shape or at least one pneumatic cylinder is/are attached between the pressing stamp (5) and the upper part (3).

11. A plant in accordance with any one of the preceding claims, **characterized in that** the plunger (4) having an ejection function can be moved into a retraction position enlarging the mold depth during the feed process.

12. A plant in accordance with any one of the preceding claims, **characterized in that**, with the upper mold part (3) positioned with a lateral offset, the otherwise closed mold is fed by a feeder system designed for droplet operation with glass gobs which fall through the middle part of the mold without contact and whose ratio of diameter to length is disposed in the range from approximately 1 : 3.5 and whose length is preferably selected to be larger than the depth of the hollow space of the mold.

13. A plant in accordance with any one of the preceding claims, **characterized in that** the station designed for the feeding of the mold with glass gobs is simultaneously made as a station for the carrying out of the pressing process.

14. A plant in accordance with any one of the preceding claims,
**characterized in that** a fall and guide channel is provided in the feed station for the supply of glass gobs in a centered manner with respect to the mold from a pre-settable drop height.

15. A plant in accordance with claim 14, **characterized in that** the fall and guide channel extends with a slight inclination to the vertical lying in the range from approximately 2° to 8° and has, optionally, a large deflection radius on the mold side for the achievement of a vertical glass gob supply.

16. A plant in accordance with any one of the preceding claims, **characterized in that**, in one or more stations following the feed and press station, one respective repressing device is provided which acts mechanically or pneumatically on the recess (12) of the head part (11) of the stopper (10).

17. A plant in accordance with any one of the preceding claims, **characterized in that** a device becoming effective directly after the pressing process is provided for the short-term heating of the region of the recess (12) of the head part (11).

18. A plant in accordance with claim 17, **characterized in that** the front surface of the pressing stamp (5) is concave in shape.

19. A plant in accordance with any one of the preceding claims,
**characterized in that** at least the two part elements (8, 8') of the mold of the middle part (2) are fitted with complementary shape-matched members at the surfaces facing one another and contacting one another in the closed state and a cross centration (21) is preferably provided between the middle part (2) and the upper part (3).

20. A plant in accordance with any one of the preceding claims, **characterized in that** each mold consisting of a base part (1), a middle part (2) and an upper part (3) is suspended in a mold holder (16) while forming a free space (17) on the base side.

21. A plant in accordance with claim 20, **characterized in that** the base part (1) and the middle part (2) are supported against vertical pressing forces which occur via a base part (18) associated with them.

22. A plant in accordance with any one of the preceding claims, **characterized in that**, for the continuous glass stopper production, a plurality of molds are arranged on a turntable and can be supplied via a single-drop feeder system or a double-drop feeder system with defined glass gobs via guide channels and the glass gobs (10) solidified by convection cooling in a removal station downstream of the respective supply station can be removed from the respective mold by means of the plunger (4) provided on the base side and by means of a suction lifter and can be transferred onto a transport belt via a slide conveying device engaging at the head part (11).

23. A plant in accordance with claim 22, **characterized in that** a cooling track follows the transport belt and a plurality of stoppers (10) can in each case be transferred into it simultaneously from the transport belt by a transverse displacement process.

24. A plant in accordance with claim 22, **characterized in that** a single liner, a monitoring path and a station for the application of a seal are arranged downstream of the cooling track and a unit for the transfer of the finished stopper onto a pallet is subsequently provided.

25. A plant in accordance with claim 1, **characterized by** a heating path which can be charged with the finished stoppers and in which the stoppers are brought to a temperature which is uniform in a substantially throughgoing manner and by a fan air cooling path adjoining it in which at least the outer region of the glass stoppers is intensively cooled and stabilized.

## Revendications

1. Installation de production de bouchons en verre pourvus d'une partie de tête et destinés à l'obturation de bouteilles, en particulier de bouteilles à vin et à vin mousseux,
comportant un moule en plusieurs parties qui détermine dans l'état fermé le contour négatif du bouchon à produire (10) et qui comprend une partie de base (1) et une partie supérieure (3), un système d'alimentation pour alimenter le moule en verre fondu, une presse à stations multiples ainsi qu'un agencement de prélèvement et de manutention des bouchons de verre fabriqués,
**caractérisée en ce que**
la partie de base (1) présente un évidement (7) correspondant à une première longueur partielle de bouchon,
**en ce qu'**il est prévu entre la partie de base (1) et la partie supérieure (3) une partie centrale (2) constituée en particulier de deux éléments de moule partiels (8, 8') mobiles en translation l'un par rapport à l'autre et perpendiculairement à l'axe longitudinal de moule (15) et susceptibles d'être accouplés avec autocentrage, éléments qui, dans l'état accouplé et en appui contre la partie de base (1), déterminent une cavité (9) qui correspond à une seconde longueur partielle de bouchon ainsi qu'à au moins une zone principale de la partie de tête (11), et
**en ce que** la partie supérieure (3) refermant la cavité de partie de tête délimite la surface plane (14) de la partie de tête (11) par un poinçon de presse (5) central mobile en translation axiale par rapport à la partie supérieure (3), et le poinçon de presse (5) sert à ménager dans la partie de tête (11) du bouchon (10) un renfoncement (12) qui compense des tolérances.

2. Installation selon la revendication 1,
**caractérisée en ce que**
la cavité (9) déterminée par les éléments de moule partiels (8, 8') constituant la partie centrale (2) s'étend axialement au-delà de la surface plane (14) de la partie de tête (11) et délimite la partie de tête (11) d'une part au niveau de sa périphérie extérieure et d'autre part au niveau d'une zone de bord radialement extérieure de la surface plane (14).

3. Installation selon la revendication 2,
**caractérisée en ce que**
la partie supérieure (3) refermant la cavité de partie de tête (3) pourvue du poinçon de presse (5) guidé au centre s'engage en coopération de formes par un talon annulaire (20) dans la cavité (9) définie par les éléments de moule partiels (8, 8'), le diamètre extérieur du talon annulaire (20) étant inférieur au diamètre extérieur de la partie de tête (11).

4. Installation selon l'une des revendications précédentes,
**caractérisée en ce que**
l'évidement (7) de la partie de base (1) est délimité du côté fond par un poussoir (4) qui a une fonction d'éjection et dont la surface frontale est inférieure à la surface de fond de l'évidement (7), et **en ce que** la partie de base (1) est réalisée en particulier d'un seul tenant.

5. Installation selon l'une des revendications précédentes,
**caractérisée en ce que**
la première longueur partielle de bouchon va en s'évasant de préférence coniquement à partir de la surface de fond de la partie de base (1) et se termine par une discontinuité (13) du diamètre du bouchon.

6. Installation selon la revendication 5,
**caractérisée en ce que**
les éléments de moule partiels (8, 8') susceptibles d'être accouplés avec autocentrage de la partie centrale (2) forment d'une part la seconde longueur partielle de bouchon en particulier de forme cylindrique et de diamètre réduit, s'étendant depuis la discontinuité (13) jusqu'à la partie de tête (11), et d'autre part la partie de tête (11) configurée de préférence en forme de disque, et ceci presque sur toute sa hauteur.

7. Installation selon la revendication 6,
**caractérisée en ce que**
le moule étant fermé, la ligne de séparation entre la partie supérieure (3) du moule et les éléments de moule partiels (8, 8') constituant la partie centrale (2) du moule se trouve dans la zone de l'arrondi du bouchon au-dessous de la surface plane (14) du bouchon (10).

8. Installation selon l'une des revendications précédentes,
**caractérisée en ce que**
la partie supérieure (3) du moule constitue au niveau de la partie de tête (11) en forme de disque d'une part une surface plane plate (14) et d'autre part une zone partielle de l'arrondi qui se transforme en un contour extérieur cylindrique de la partie de tête (11).

9. Installation selon l'une des revendications précédentes,
**caractérisée en ce que**
le diamètre du poinçon de presse (5) est supérieur au diamètre de la seconde longueur partielle de bouchon.

10. Installation selon l'une des revendications précédentes,
**caractérisée en ce que**
le poinçon de presse (5) est actionné en retard par rapport à la partie supérieure (3) du moule, et **en ce qu'**un ressort de compression central, une pluralité de ressorts de compression (6) agencés en anneau ou au moins un vérin pneumatique est/sont monté(s) entre le poinçon de presse (5) et la partie supérieure (3).

11. Installation selon l'une des revendications précédentes,
**caractérisée en ce que**
pendant l'opération d'alimentation, le poussoir (4) ayant une fonction d'éjection est transférable dans une position de retrait augmentant la profondeur du moule.

12. Installation selon l'une des revendications précédentes,
**caractérisée en ce que**
la partie supérieure (3) du moule étant positionnée en décalage latéral, le moule par ailleurs fermé est alimenté par un système d'alimentation conçu pour un fonctionnement en goutte à goutte, avec des lots de verre tombant sans contact à travers la partie centrale du moule, dont le rapport entre le diamètre et la longueur est dans la plage d'environ 1 : 3,5 et dont la longueur est choisie de préférence supérieure à la profondeur de la cavité de moule.

13. Installation selon l'une des revendications précédentes,
**caractérisée en ce que**
la station destinée à l'alimentation du moule en lots de verre est réalisée simultanément sous forme de station d'exécution de l'opération de pressage.

14. Installation selon l'une des revendications précédentes,
**caractérisée en ce que**
dans la station d'alimentation est prévue une goulotte de chute et de guidage pour l'acheminement, centré par rapport au moule, de lots de verre à partir d'une hauteur de chute prédéterminée.

15. Installation selon la revendication 14,
**caractérisée en ce que**
la goulotte de chute et de guidage s'étend sous une faible inclinaison de l'ordre d'environ 2° à 8° par rapport à la verticale et présente du côté moule le cas échéant un grand rayon de déviation pour atteindre un acheminement vertical des lots de verre.

16. Installation selon l'une des revendications précédentes,
**caractérisée en ce que**
dans une ou dans plusieurs stations suivant la station d'alimentation et de pressage, il est prévu un dispositif respectif de post-pressage agissant par voie mécanique ou pneumatique sur le renfoncement (12) de la partie de tête (11) du bouchon (10).

17. Installation selon l'une des revendications précédentes,
**caractérisée en ce que**
il est prévu un dispositif qui devient actif immédiatement après l'opération de pressage pour l'échauffement bref de la zone du renfoncement (12) dans la partie de tête (11).

18. Installation selon la revendication 17,
**caractérisée en ce que**
la surface frontale du poinçon de presse (5) est réalisée concave.

19. Installation selon l'une des revendications précédentes,
**caractérisée en ce que**
au moins les deux éléments de moule partiels (8, 8') de la partie centrale (2) sont équipés d'organes de coopération de formes réalisés de façon complémentaire sur les surfaces tournées l'une vers l'autre et venant en contact dans l'état fermé, et **en ce qu'**un centrage en croix (21) est prévu entre la partie centrale (2) et la partie supérieure (3).

20. Installation selon l'une des revendications précédentes,
**caractérisée en ce que**
chaque moule constitué de la partie de base (1), de la partie centrale (2) et de la partie supérieure (3) est suspendu dans un porte-moule (16) en formant un espace libre (17) côté fond.

21. Installation selon la revendication 20,
**caractérisée en ce que**
la partie de base (1) et la partie centrale (2) sont soutenues via une partie de base (18) qui leur est associée à l'encontre de forces de pressage qui se produisent verticalement.

22. Installation selon l'une des revendications précédentes,
**caractérisée en ce que**
pour la production en continu de bouchons en verre, plusieurs moules sont agencés sur un plateau tournant et sont susceptibles d'être chargés en lots de verre définis via des goulottes de guidage par un système d'alimentation à goutte simple ou à goutte double, et les bouchons de verre (10) solidifiés par refroidissement par convection sont susceptibles d'être prélevés du moule respectif au moyen d'un poussoir (4) prévu du côté fond et d'un organe de levage par succion dans une station de prélèvement agencée en aval de la station de chargement respective, et sont transférables sur une bande de transport via un dispositif de convoyage coulissant attaquant la partie de tête (11).

23. Installation selon la revendication 22,
**caractérisée en ce que**
la bande de transport est suivie par une bande de refroidissement dans laquelle une pluralité de bouchons respectifs (10) sont transférables simultanément depuis la bande de transport par une opération de translation transversale.

24. Installation selon la revendication 22,
**caractérisée en ce que**
en aval de la bande de refroidissement sont agencés un dispositif d'alignement simple, une ligne de contrôle ainsi qu'une station pour appliquer un joint, et ensuite est prévue une unité pour transférer les bouchons finis sur une palette.

25. Installation selon la revendication 1,
**caractérisée par**
une ligne d'échauffement susceptible d'être chargée par les bouchons finis, dans laquelle les bouchons sont amenés à une température uniforme sensiblement en continu, suivie par une ligne de refroidissement à air soufflé dans laquelle au moins la zone extérieure des bouchons en verre est refroidie de façon intense et stabilisée.
